## Europäisches Patentamt

## European Patent Office

## Office européen des brevets

(19)

(11) Veröffentlichungsnummer: **0 123 136**
**B1**

(12) **EUROPÄISCHE PATENTSCHRIFT**

(45) Veröffentlichungstag der Patentschrift:
**19.11.87**

(51) Int. Cl.⁴: **E 04 F 15/18,** E 04 B 1/74

(21) Anmeldenummer: **84103073.7**

(22) Anmeldetag: **21.03.84**

(54) Belagaufbau für eine Fussboden- oder Wandheizung.

(30) Priorität: **22.03.83 DE 3310280**

(43) Veröffentlichungstag der Anmeldung:
**31.10.84 Patentblatt 84/44**

(45) Bekanntmachung des Hinweises auf die Patenterteilung:
**19.11.87 Patentblatt 87/47**

(84) Benannte Vertragsstaaten:
**AT BE CH DE FR IT LI LU NL SE**

(56) Entgegenhaltungen:
DE - A - 2 431 019
DE - A - 2 719 682
DE - A - 2 823 236
DE - A - 3 007 478

(73) Patentinhaber: **Werthebach, Günther,**
**Dreisbachstrasse 23, D-5902 Netphen 2 (DE)**

(72) Erfinder: **Werthebach, Günther, Dreisbachstrasse 23,**
**D-5902 Netphen 2 (DE)**

(74) Vertreter: **Liska, Horst, Dr. et al, Patentanwälte H.**
**Weickmann, Dr. K. Fincke, F.A. Weickmann, B. Huber, Dr.**
**H. Liska, Dr. J. Prechtel**
**Möhlstrasse 22 Postfach 86 08 20,**
**D-8000 München 86 (DE)**

## Beschreibung

Die Erfindung betrifft einen Belagaufbau für eine Fussboden- oder Wandheizung mit einer auf den Untergrund aufgebrachten Unterschicht, einer auf die Unterschicht aufgebrachten Isolierschicht zur Feuchtigkeits- und/oder Schalldämmung, einer auf die Isolierschicht aufgebrachten Wärmedämmplatte, die vorstehende Noppen aufweist, einem auf die Noppen aufgebrachten Plattenbelag aus Naturstein, Kunststein oder Betonwerkstein und mit Einrichtungen, die eine Heizmittelzirkulation zwischen den Noppen ermöglichen, insbesondere zwischen die Noppen eingelegte Heizrohre, bei welchen die Höhe der Noppen den Durchmesser der Heizrohre übersteigt.

Bekannte im «Nassverfahren» hergestellte Belagaufbauten für Fussbodenheizungen umfassen eine Dämmschicht für die Wärme- und Trittschalldämmung, die auf den tragenden Untergrund, zum Beispiel die Betondecke aufgebracht ist. Die Heizrohre der Fussbodenheizung sind entweder in die Dämmschicht eingebettet oder aber in eine über der Dämmschicht angeordnete Ausgleichsschicht eingelegt. Über die Ausgleichsschicht ist ein Estrich mit einer Bewehrung eingebaut. Es gibt auch Fussbodenheizungen, in denen die Heizrohre direkt in die Estrichschicht eingelegt sind. Derartige Belagaufbauten benötigen über ihre Fläche verteilt liegende Dehnungsfugen.

Die Höhe der Belagaufbauten beträgt in der Regel zwischen 13 und 15 cm, wobei dieser bekannte Belagaufbau nur unter Zerstörung repariert werden kann, falls Heizrohre undicht werden sollten. Als wesentlicher Kostenfaktor des bekannten Belagaufbaus ist eine relativ grosse Bauzeit zu berücksichtigen, die in der Regel 5 bis 6 Wochen beträgt, da der Estrich aushärten und abtrocknen muss. Erst im Anschluss hieran kann der übliche Boden-Trittbelag auf den Estrich aufgebracht werden.

Aus der DE-A-3 007 478 ist ein im «Trockenverfahren» herstellbarer Belagaufbau für eine Fussbodenheizung bekannt. Über einer auf den Untergrund aufgelegten Kunststoffolie wird eine Wärmedämmplatte aufgebracht. Die Wärmedämmplatte hat nach oben abstehende Noppen, zwischen die die Heizrohre der Fussbodenheizung eingelegt werden. Nach dem Ausfüllen verbleibender Zwischenräume zwischen den Noppen werden auf die Noppen zwei Lagen von Aluminiumdeckplatten stossversetzt aufgebracht, die miteinander und mit der Oberseite der Noppen verklebt werden. Die Aluminiumdeckplatten bilden die Unterlage für einen Trittbelag, beispielsweise in Form von Keramikfliesen, der auf die Aluminiumdeckplatten aufgeklebt wird.

Es ist Aufgabe der Erfindung, einen Belagaufbau der aus der DE-A-3 007 478 bekannten Art so zu verbesssern, dass er bei Verwendung eines Nutzbelags aus Natur-, Kunst- oder Betonwerkstein einfacher, rascher und mit geringeren Kosten herstellbar ist, wobei insbesondere keine in der Fläche liegenden Dehnungsfugen erforderlich sein sollen und im Vergleich zu bisherigen Belagaufbauten eine geringe Bauhöhe hat.

Diese Aufgabe wird erfindungsgemäss dadurch gelöst, dass die Unterschicht aus einer nivellierenden Ausgleichsschicht aus Spachtelmasse besteht und dass der Plattenbelag lose auf die Noppen aufgelegt ist und aus allseitig an ihren Stirnseiten mit Nuten versehenen Belagplatten besteht, die mittels in die Nuten benachbarter Belagplatten eingelegter und hier mit einem Kleber befestigter Federn miteinander verbunden sind, wobei der Kleber die Nuten und die Fugen zwischen benachbarten Belagplatten ausfüllt. Bei dem Kleber handelt es sich zweckmässigerweise um einen aushärtbaren frost- und säurebeständigen Kleber.

Der Boden- bzw. Wandbelagaufbau gemäss der Erfindung ist also trocken verlegbar. Voraussetzung ist nur, dass der Untergrund mittels Spachtelmasse nivelliert wird, wozu sich am besten selbstfliessende Spachtelmasse eignet. Auf den so vorbereiteten Untergrund werden dann nur noch die Wärme- und Schalltrittdämmplatten aufgelegt, die Zwischenräume bilden, in die die Heizrohre eingelegt werden. Der obere Trittbelag besteht aus Platten, die allseitig mit Nuten versehen sind, so dass in diese Nuten Federn einlegbar sind, die mit Kleber in diesen Nuten befestigt werden, so dass auch in den Randbereichen der Platten, wenn diese nicht unmittelbar von Noppen getragen sein sollten, Scherkräfte übertragen werden können. Diese Ausbildung des obersten Belages macht es möglich, dass dieser Belag unmittelbar auf die Wärmedämmplatte aufgebracht werden kann, wodurch der Bodenaufbau in einem Arbeitsgang in tockener Bauweise erstellt werden kann und Abbindezeiten, wie sie bei Estrich bisher benötigt werden, entfallen. Dieser Wand- und Bodenbelagaufbau macht es möglich, mit wesentlich geringeren Bauhöhen auszukommen, wobei Bauhöhen von 5 bis 6 cm ausreichend sind, im Gegensatz zu bisher benötigten 13 bis 15 cm. Des weiteren muss in dem Bodenbelag innerhalb der Fläche keine Dehnungsfuge vorgesehen werden, da die Platten lose auf dem Dämmaterial aufliegen und somit eine Relativbewegung zu diesem ausführen können. Lediglich in den Randbereichen müssen entsprechende Fugen vorgesehen werden, die die möglichen Dehnungen des Bodenbelages aufnehmen. Während die bekannten Bodenaufbauten bisher mindestens 6 Wochen zur Herstellung in Anspruch nahmen, kann ein erfindungsgemässer Aufbau in weniger als einer Woche erstellt werden. Was den Plattenbelag betrifft, so eignet sich hier in erster Linie Natur- bzw. Kunststein.

Die Kostenersparnis ergibt sich insbesondere aus der geringeren Konstruktionshöhe, da hier entsprechend Mauerwerk, Innenputz, Aussenputz, Aussendämmung eingespart werden kann. Darüberhinaus ist die im Boden eingebaute Masse geringer, so dass die Fussbodenheizung wesentlich schneller reagieren kann, so dass der bisher bekannte Nachteil der Fussbodenheizung, und zwar die relativ grosse Trägheit, weitgehend behoben ist. Durch Materialauswahl, z.B. bei Natursteinen, kann ein guter Wärmeleiter sowie ein guter Wärmespeicher gewählt werden, so dass auch hierdurch das Regelverhalten der Fussbodenheizung veränderbar ist. Darüberhinaus können auch die verbleibenden Zwischenräume zwischen den Noppen der Wärmedämmplatte dazu benutzt werden, um hier zusätzlich Schamotte einzufüllen, die die Wärmespeicherkapazität weiter erhöhen.

Ein weiterer wesentlicher Vorteil eines erfindungsgemässen Boden- bzw. Wandbelagaufbaues besteht darin, dass dieser sehr reparaturfreundlich ist. Durch den speziellen Belagaufbau ist an jeder Stelle bekannt, wie tief die Heizrohre liegen, so dass, falls Undichtigkeiten aufgetreten sein sollten, die oberste Steinschicht in einfacher Weise herausgeschnitten werden kann, ohne dass eine Beschädigung der Heizrohre eintritt. Wird dies entsprechend vorsichtig durchgeführt, so können die herausgeschnittenen Steinplatten nach erfolgter Reparatur wieder eingesetzt werden, wobei lediglich die Nut- und Federverbindung mit den angrenzenden Platten wieder hergestellt werden muss.

Ein Ausführungsbeispiel der Erfindung ist im folgenden anhand der Zeichnung näher beschrieben, in dieser zeigt:

Fig. 1 einen Schnitt durch einen erfindungsgemäss ausgebildeten Bodenbelagaufbau,

Fig. 2 eine für den Bodenbelagaufbau nach Fig. 1 verwendbare Belagplatte,

Fig. 3 eine Feder zur Verbindung der den Trittbelag bildenden Belagplatten und

Fig. 4 den Bodenbelagaufbau in perspektivischer Darstellung.

Der in den Figuren dargestellte Fussbodenaufbau besteht aus einer Ausgleichsschicht 2 aus Spachtelmasse, die auf eine Betondecke 3 aufgebracht ist und die Betondecke 3 nivelliert. Hierfür wird zweckmässig Spachtelmasse verwendet, die von selbst verläuft. Auf die Ausgleichsschicht 2 ist eine Trittschallisolierung 4 sowie eine Wärmedämmplatte 5 aufgebracht. Um die Abstrahlverluste der Fussbodenheizung zur Betondecke 3 hin möglichst klein zu halten, ist auf die Wärmedämmplatte 5 eine Aluminiumfolie 6 aufgelegt. Auf die Aluminiumfolie 6 ist dann eine weitere Wärmedämmplatte 7 aufgelegt, die mit in bestimmten Abständen angeordneten Noppen 8 versehen ist. Die Höhe der Noppen 8 ist so gewählt, dass in die Zwischenräume zwischen den Noppen 8 eingelegte Heizrohre 9 ganz im Zwischenraum zwischen den Noppen 8 zu liegen kommen. Auf die die Oberfläche bildenden Noppen 8 sind dann einen Trittbelag bildende Belagplatten 10 lose aufgelegt. Eine derartige Platte 10 ist in Fig. 2 in perspektivischer Darstellung gezeichnet. Die Platte 10 hat an ihren Stirnseiten eine umlaufende Nut 11, in die eine Feder 12 eingelegt ist. Die Fugen 13 zwischen den einzelnen Platten 10 sowie die Nuten 11 sind mit einem Kleber 14 ausgefüllt, der vorteilhaft in weichem Zustand wasserlöslich ist, in ausgehärtetem Zustand jedoch wasserunlöslich und säurebeständig ist.

Durch diesen Kleber wird ein fester Verbund der Platten 10 erhalten, wobei durch die eingelegte Feder 12 auch erhebliche Scherkräfte von Platte zu Platte übertragen werden können, so dass es nicht erforderlich ist, dass die Platten in ihren Endbereichen unmittelbar von den Noppen 8 unterstützt sind. Auf der Wärmedämmplatte 7 können Belagplatten 10 beliebiger Grösse und mit beliebigem Format verlegt werden, wobei die Wärmedämmplatte 7 in ihrer Noppenausbildung lediglich den einzulegenden Heizrohren 9 anzupassen ist.

Im Ausführungsbeispiel sind die beiden Wärmedämmplatten 5 und 7 getrennt ausgebildet. Es ist jedoch auch ohne weiteres möglich, hier nur eine einzige Wärmedämmplatte zu verwenden, wobei dann die Aluminiumfolie, sofern diese eingesetzt wird, unmittelbar auf die Ausgleichsschicht 2 oder aber auf die Trittschalldämmplatte 4 aufgelegt wird.

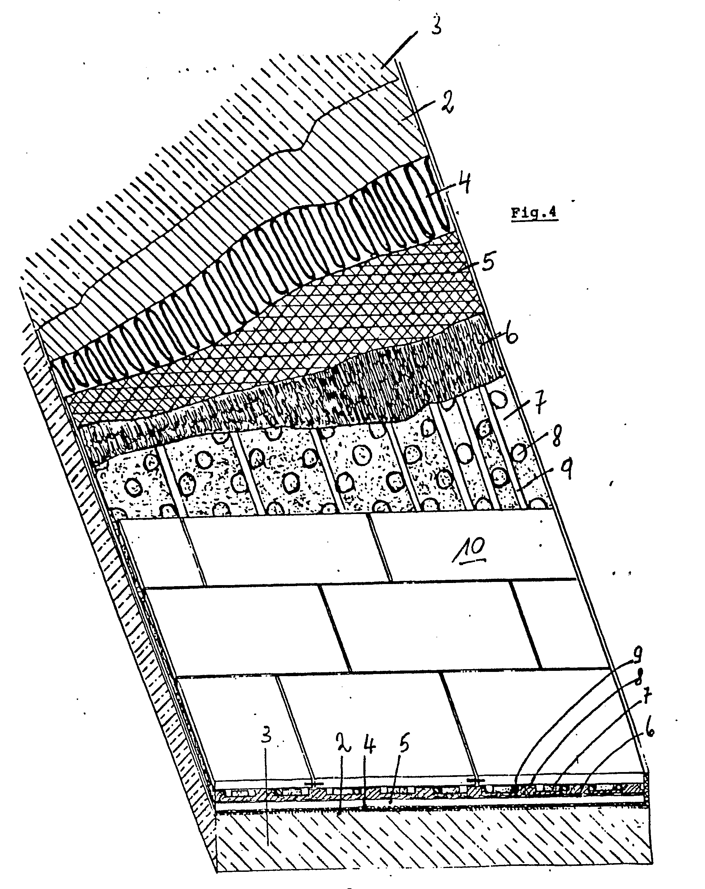

In Fig. 4 ist der Aufbau noch einmal in perspektivischer Darstellung gezeigt, wobei die Noppen 8 der Wärmedämmplatte 7 so angeordnet sind, dass die Heizrohre 9 in Winkeln von jeweils 45° geradlinig in der Wärmedämmplatte 7 verlegt werden können. Es ist also eine grosse Variationsmöglichkeit für das Einlegen der Heizrohre 9 gegeben.

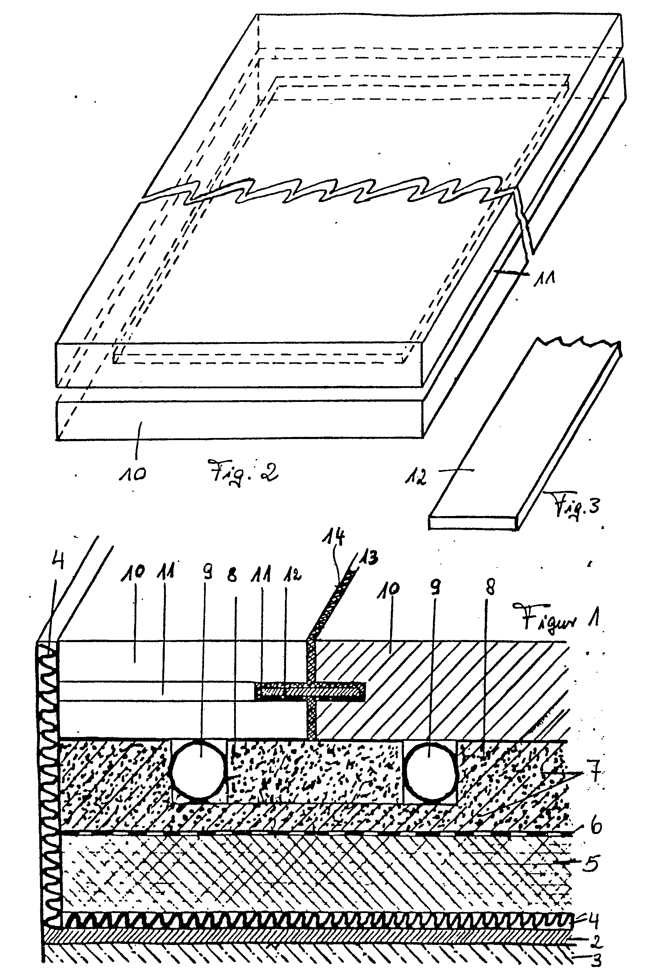

Die gesamte Fläche benötigt keine Dehnungsfuge, da die durch den Kleber und die Feder fest miteinander verbundenen Platten 10 relativ zur Wärmedämmplatte 7 verschiebbar sind. Lediglich in den Randbereichen ist eine Dehnungsfuge vorzusehen, die z.B. durch Einlegen einer Trittschalldämmplatte 4 gebildet sein kann, wie dies in Fig. 1 und 4 angedeutet ist.

Der Bodenaufbau ist trocken auszubilden, so dass dieser in einem Arbeitsgang erstellt werden kann, wobei nach Einbringen des Klebers 14 lediglich 24 Stunden verstreichen müssen, bis der Bodenbelagaufbau voll benutzbar ist.

Voraussetzung für diesen Bodenbelagaufbau ist jedoch, dass die Belagplatten 10 zumindest mit einer planen Unterseite versehen sind, wobei die Nuten 11 in gleichem Abstand zur Unterseite in der Platte angeordnet sind. Die Höhe des Aufbaues braucht 5 bis 6 cm nicht zu überschreiten, so dass hier gegenüber herkömmlichen Bodenbelagaufbauten etwa 10 cm eingespart werden können, wodurch sich bereits erhebliche Einsparungen erzielen lassen, da die Geschosshöhe entsprechend niedriger gewählt werden kann. Der anhand der Fig. 1 bis 4 beschriebene Fussbodenaufbau kann gleichermassen auch als Wandaufbau verwendet werden, wobei in diesem Fall die Platten mittels entsprechender, in die Nuten eingreifender Verankerungen an den Wänden zu befestigen sind.

Ein erfindungsgemässer Wand- und Bodenaufbau ist nicht nur für die Verlegung herkömmlicher Fussbodenheizungen geeignet, sondern darüberhinaus auch für eine Warmluftheizung, wobei die Warmluft zwischen den Noppen und den Belagplatten hindurchstreichen kann. Eine derartige Warmluftheizung hat den Vorteil, dass sie in zweierlei Hinsicht zur Erwärmung der Räume beitragen kann. Zum einen werden die Bodenplatten aufgeheizt und geben die Wärme in bekannter Weise ab. Darüberhinaus können an vorbestimmten Stellen, z.B. unterhalb der Fenster, Warmluftaustrittsöffnungen angebracht werden, über die die Warmluft dann unmittelbar in den Raum austreten kann. Die Rückführung der Warmluft kann in bekannter Art und Weise an zentraler Stelle erfolgen.

## Patentansprüche

1. Belagaufbau für eine Fussboden- oder Wandheizung mit einer auf den Untergrund (3) aufgebrachten Unterschicht (2), einer auf die Unterschicht (2) aufgebrachten Isolierschicht (4) zur Feuchtigkeits- und/oder Schalldämmung, einer auf die Isolierschicht (4) aufgebrachten Wärmedämmplatte (7), die vorstehende Noppen (8) aufweist, einem auf die Noppen (8) aufgebrachten Plattenbelag (10) aus Naturstein, Kunststein oder Betonwerkstein und mit Einrichtungen, die eine Heizmittelzirkulation zwischen den Noppen (8) ermöglichen, insbesondere zwischen die Noppen (8) eingelegte Heizrohre (9), bei welchen die Höhe der Noppen (8) den Durchmesser der Heizrohre (9) übersteigt, dadurch gekennzeichnet, dass die Unterschicht aus einer nivellierenden Ausgleichschicht (2) aus Spachtelmasse besteht und dass der Plattenbelag lose auf die Noppen (8) aufgelegt ist und aus allseitig an ihren Stirnseiten mit Nuten (11) versehenen Belagplatten (10) besteht, die mittels in die Nuten (11) benachbarter Belagplatten (10) eingelegter und hier mit einem Kleber (14) befestigter Federn (12) miteinander verbunden sind, wobei der Kleber (14) die Nuten (11) und die Fugen (13) zwischen benachbarten Belagplatten (10) ausfüllt.

2. Belagaufbau nach Anspruch 1, dadurch gekennzeichnet, dass der Kleber (14) ein aushärtbarer Kleber ist.

3. Belagaufbau nach Anspruch 2, dadurch gekennzeichnet, dass der Kleber (14) ein im flüssigen Zustand wasserlöslicher, im ausgehärteten Zustand wasserunlöslicher, frost- und säurebeständiger Kleber ist.

4. Belagaufbau nach einem der Ansprüche 1 bis 3, dadurch gekennzeichnet, dass die Feder (12) aus einem Metallstreifen, vorzugsweise aus einem Aluminiumstreifen, besteht.

5. Belagaufbau nach einem der Ansprüche 1 bis 4, wobei freie Zwischenräume zwischen den Noppen (8) der Wärmedämmplatte (7) mit einem Füllmaterial ausgefüllt sind, dadurch gekennzeichnet, dass die freien Zwischenräume mit Schamotte ausgefüllt sind.

6. Belagaufbau nach einem der Ansprüche 1 bis 5, wobei zusätzlich eine aus Aluminium bestehende Schicht vorgesehen ist, dadurch gekennzeichnet, dass unterhalb der mit Noppen (8) versehenen Wärmedämmplatte (7) eine Aluminiumfolie eingelegt ist.

7. Belagaufbau nach Anspruch 6, dadurch gekennzeichnet, dass die Isolierschicht (4) zwischen der Aluminiumfolie (6) und einer Trittschalldämmschicht (4) eine weitere Wärmedämmplatte (5) umfasst.

## Revendications

1. Structure de revêtement pour chauffage par le sol ou par les murs, comportant une couche inférieure (2) placée sur le sol de base (3), une couche isolante (4) placée sur la couche inférieure (2) pour arrêter l'humidité et/ou le son, un panneau calorifuge (7) placé sur la couche isolante (4) et présentant des plots en saillie (8), un dallage (10) qui, placé sur les plots (8) et constitué en pierre naturelle, en pierre artificielle ou en bloc de béton, permet une circulation du moyen de chauffage entre les plots (8), en particulier des tubes de chauffage (9) disposés entre les plots (8), la hauteur des plots (8) étant supérieure à celle des tubes de chauffage (9), caractérisée en ce que la couche inférieure compensatrice et nivelable (2) est constituée par un matériau étendable à la spatule, et en ce que le dallage repose librement sur les plots (8) et est constituée par des dalles (10) qui comportent des rainures (11) sur toutes leurs faces latérales et sont réunies entre elles par des languettes (12) fixées avec une colle (14), la colle (14) remplissant les rainures (11) et les zones de jointure (13) entre les dalles adjacentes (10).

2. Structure de revêtement selon la revendication 1, caractérisée en ce que la colle (14) est une colle thermodurcissable.

3. Structure de revêtement selon la revendication 2, caractérisée en ce que la colle (14) est une colle soluble dans l'eau à l'état liquide, insoluble dans l'eau à l'état thermodurci, et résistante au gel et aux acides.

4. Structure de revêtement selon l'une des revendications 1 à 3, caractérisée en ce que la languette (12) est constituée par une lame de métal, avantageusement une lame d'aluminium.

5. Structure de revêtement selon l'une des revendications 1 à 4, dans laquelle des espaces intermédiaires libres entre les plots (8) du panneau calorifuge (7) sont remplis avec un matériau de garnissage, caractérisée en ce que les espaces intermédiaires libres sont remplis avec de l'argile réfractaire.

6. Structure de revêtement selon l'une des revendications 1 à 5, dans laquelle est prévue additionnellement une couche en aluminium, caractérisée en ce qu'une feuille d'aluminium (6) est placée en-dessous du panneau calorifuge (7) muni des plots (8).

7. Structure de revêtement selon la revendication 6, caractérisée en ce que la couche isolante (4) comprend entre la feuille d'aluminium (6) et une couche isolante des bruits de marche (4) un autre panneau calorifuge (5).

## Claims

1. Covering structure for a floor or wall heating system with an under-layer (2) applied to the base (3), an insulation layer (4) applied to the under-layer (2) for moisture and/or sound insulation, a thermal insulation panel (7) applied to the insulation layer (4) and comprising protuberances (8), a panel covering (10) of natural stone, artificial stone or concrete ashlar applied upon the protuberances (8), and with devices which render possible a circulation of heating medium between the protuberances, especially heating pipes (9) inserted between the protuberances (8), in which the height of the protuberances (8) exceeds the diameter of the heating pipes (9), characterised in that the under-layer consists of a levelling layer (2) of mastic and in that the panel covering is laid loosely upon the protuberances (8) and consists of covering panels (10) provided at their edges on all sides with grooves (11) which are connected with one another by means of tongues (12) inserted into the grooves (11) of adjacent covering panels (10) and here secured with an adhesive (14), the adhesive (14) filling out the grooves (11) and the joints (13) between adjacent covering panels (10).

2. Covering structure according to Claim 1, characterised in that the adhesive (14) is age-hardenable adhesive.

3. Covering structure according to Claim 2, characterised in that the adhesive (14) is watersoluble in the liquid condition, water-insoluble in the hardened condition and resistant to frost and acid.

4. Covering structure according to one of Claims 1 to 3, characterised in that the tongue (12) consists of a metal strip, preferably an aluminium strip.

5. Covering structure according to one of Claims 1 to 4, where free interspaces between the protuberances (8) of the thermal insulation panel (7) are filled out with a filler material, characterised in that the free interspaces are filled out with fire clay.

6. Covering structure according to one of Claims 1 to 5, where a layer consisting of aluminium is additionally provided, characterised in that an aluminium foil is inserted beneath the thermal insulation panel (7) provided with protuberances (8).

7. Covering structure according to Claim 6, characterised in that the insulating layer (4) comprises a further thermal insulation panel (5) between the aluminium foil (6) and a tread-sound absorption layer (4).

Fig. 2

10

12

Fig. 3

Figur 1

2/2

Fig.4